(19)

**Europäisches Patentamt**
**European Patent Office**
**Office européen des brevets**

(11)　**EP 1 687 876 B1**

(12)　**EUROPÄISCHE PATENTSCHRIFT**

(45) Veröffentlichungstag und Bekanntmachung des Hinweises auf die Patenterteilung:
**15.10.2008 Patentblatt 2008/42**

(21) Anmeldenummer: **04803268.4**

(22) Anmeldetag: **25.11.2004**

(51) Int Cl.:
*H01S 3/081* *(2006.01)*　　*H01S 3/23* *(2006.01)*

(86) Internationale Anmeldenummer:
**PCT/EP2004/013375**

(87) Internationale Veröffentlichungsnummer:
**WO 2005/053118 (09.06.2005 Gazette 2005/23)**

(54) **HOCHREPETIERENDES LASERSYSTEM MIT KOMPAKTEM AUFBAU**

HIGHLY REPETITIVE LASER SYSTEM HAVING A COMPACT STRUCTURE

SYSTEME LASER COMPACT A TAUX DE REPETITION ELEVE

(84) Benannte Vertragsstaaten:
**DE FR GB**

(30) Priorität: **28.11.2003 US 525178 P**

(43) Veröffentlichungstag der Anmeldung:
**09.08.2006 Patentblatt 2006/32**

(73) Patentinhaber: **High Q Laser Production GmbH**
**6845 Hohenems (AT)**

(72) Erfinder:
- **KOPF, Daniel**
  **A-6832 Röthis (AT)**
- **LEDERER, Maximilian, Josef**
  **A-6861 Alberschwende (AT)**

(74) Vertreter: **Harmann, Bernd-Günther**
**Büchel, Kaminski & Partner**
**Patentanwälte Est.**
**Austrasse 79**
**9490 Vaduz (LI)**

(56) Entgegenhaltungen:
**EP-A- 0 798 825　　　DE-A1- 10 063 976**

- **GUANGHUA CHENG, LIANJUN YU, YISHAN WANG, QING LIU, GUOFU CHEN, WEI ZHAO: "A compact Ti:sapphire femtosecond pulse amplifier without stretcher at high repetition rate" CHINESE OPTICS LETTERS, Bd. 1, Nr. 4, 20. April 2003 (2003-04-20), Seiten 225-227, XP009044763 CHINA in der Anmeldung erwähnt**

- **NORRIS T B: "FEMTOSECOND PULSE AMPLIFICATION AT 250 KHZ WITH A TI: SAPPHIRE REGENERATIVE AMPLIFIER AND APPLICATION TO CONTINUUM GENERATION" OPTICS LETTERS, OPTICAL SOCIETY OF AMERICA, WASHINGTON, US, Bd. 17, Nr. 14, 15. Juli 1992 (1992-07-15), Seiten 1009-1011, XP000288964 ISSN: 0146-9592 in der Anmeldung erwähnt**

- **JOO T ET AL: "TI:SAPPHIRE REGENERATIVE AMPLIFIER FOR ULTRASHORT HIGH-POWER MULTIKILOHERTZ PULSES WITHOUT AN EXTERNAL STRETCHER" OPTICS LETTERS, OPTICAL SOCIETY OF AMERICA, WASHINGTON, US, Bd. 20, Nr. 4, 15. Februar 1995 (1995-02-15), Seiten 389-391, XP000491035 ISSN: 0146-9592 in der Anmeldung erwähnt**

- **KAWANAKA F ET AL: "Q-switching operation with a diode-pumped cooled Yb:LiYF4 for chirped pulse regenerative amplification" CONFERENCE ON LASERS AND ELECTRO-OPTICS. (CLEO 2002). TECHNICAL DIGEST. POSTCONFERENCE EDITION. LONG BEACH, CA, MAY 19 - 24, 2002, TRENDS IN OPTICS AND PHOTONICS. (TOPS), WASHINGTON, WA : OSA, US, Bd. VOL. 73, 19. Mai 2002 (2002-05-19), Seiten 404-404, XP010606879 ISBN: 1-55752-706-7**

**Beschreibung**

Die Erfindung betrifft ein hochrepetierendes Lasersystem mit kompaktem Aufbau nach dem Oberbegriff des Anspruchs 1.

Für viele Anwendungen, wie z.B. in der Biomedizin oder der Materialbearbeitung, werden hohe Intensitäten von Laserpulsen gefordert. Bei guter Strahlqualität (M2 < 1.2) und sub-500fs-Pulsen bedeutet dies in der Regel Pulsenergien im Bereich von 1-10 $\mu$J, um die typischen Ablations- bzw. Bearbeitungsschwellenenergiedichten zu übertreffen und eine effiziente Prozessführung zu ermöglichen.

Im Bereich der Materialbearbeitung stellt ein Anwendungsbeispiel das Schreiben von beliebig und höchst präzise geformten Wellenleitern in Glas oder Plastik dar, wobei diese Technologie eine grosse Bedeutung für die zukünftigen Telekommunikationsnetzwerke besitzt.

Bedingt durch die kurze und effiziente Energieeinbringung (hauptsächlich durch Multiphotonenabsorption) sind bei Femtosekunden-Pulsen Nebenwirkungen thermo-mechanischer Art eher vernachlässigbar. Dies führt, zusammen mit einer Fokussierung zum Beugungslimit, zur erwähnten Präzision, und - bei medizinischen Anwendungen - auch zu Schmerzfreiheit. Sofern die Schwellwertenergiedichte erreicht wird ist weiterhin wichtig, dass der Prozess mit relativ hohen Wiederholraten bewerkstelligt werden kann, um die Bearbeitungsgeschwindigkeit zu erhöhen.

Bisherige Lasergeräte, insbesondere solche mit wiederherstellbaren Verstärkern bzw. mit chirped pulse regenerative amplification (CPA), erreichen zwar die nötigen Energien, sind jedoch oft durch die Grösse der nötigen Pulsstrecker/Kompressor-Einheit limitiert. Oftmals, wie bei Ti:Saphir-Systemen, kommt noch die Notwendigkeit eines teuren und voluminösen Pump-Lasers hinzu. Des weiteren wurden solche Systeme bisher meist nur mit Wiederholraten von typischerweise 10-20 kHz verwirklicht. Ausserdem bedingen die externen Komponenten, vor allem im Pulsstrecker, eine erhöhte Komplexität und erhöhten Aufwand für die Justage.

Lasersysteme mit einem wiederherstellbaren Verstärker nach dem Prinzip der Chirped Pulse Amplification sind beispielsweise aus der US 2003/0095320, sowie aus M. Pessot et al, "Chirped Pulse Amplification of a 300fs Pulse in an Alexandrite Regenerative Amplifier," IEEE J. Quantum Electron., QE-19, Seiten 61-66, 1989 oder H. Liu et al, "Directly diode-pumped Yb:KY(WO4)2 regenerative amplifiers," Opt. Lett. vol. 27, Seiten 722-724, 2002 bekannt.

Eine grössere Kompaktheit des Aufbaus kann bei Systemen niedrigerer Pulsenergie erreicht werden, indem auf einen Pulsstrecker zur Streckung von Saat-Pulsen vor der Einkopplung in den wiederherstellbaren Verstärker verzichtet wird. Der Effekt der Pulsstreckung wird bei solchen Anordnungen durch die ohnehin gattungsgemäss vorhandenen Komponenten eines wiederherstellbaren Verstärkers bewirkt, wie z.B. durch Verstärkermedium, Pockels-Zelle, Viertelwellenlängenplätt-chen oder Dünnschichtpolarisator.

Ein solches Lasersystem des Stands der Technik ohne externen Pulsstrecker ist beispielsweise aus "A compact Ti:sapphire femtosecond pulse amplifier without stretcher at high repetition rate", Guanghua Cheng, Lianjun Yu, Yishan Wang, Qing Liu, Guofu Chen, Wie Zhao, Chinese Optics Letters, Vol. 1, No. 4, 20. April 2003, Seiten 225-227, bekannt. In dieser Anordnung mit Ti:Saphir als Lasermedium wird auf einen speziell ausgebildeten Pulsstrecker verzichtet, wobei die notwendige Pulsstreckung durch die dispersiven Einflüsse der Systemkomponenten der Kavität des wiederherstellbaren Verstärkers erfolgt. Eine nachfolgende Kompression wird durch zwei Prismenpaare bewirkt. Dabei wird ein Saatpuls von weniger als 80 fs Dauer während aller Umläufe auf total 2,13 ps gestreckt. Die angegebene Pulsleistung beträgt 100 $\mu$J. Zur Vermeidung von Beschädigungen des Lasermediums während der Verstärkungsphase von Saatpulsen wird der Saphir-Kristall ausserhalb des Fokus der konfokalen Kavität plaziert, so dass auch bei hohen Pumpleistungen keine Schädigungen auftreten. Jedoch führt dies mangels Verstärkung beim cw-Pumpen zur Notwendigkeit, den Verstärker gepulst zu pumpen, was wiederum niedrige Wiederholraten (~1kHz) zur Folge hat.

Eine ähnliche Anordnung beschreibt "Femtosecond pulse amplification at 250 kHz with a Ti:sapphire regenerative amplifier and application to continuum generation", T.B. Norris, Optics Letters, Vol. 17, No. 14, 15. Juli 1992, Seiten 1009-1011. Zur Erzielung von Pulsen mit einer Leistung von 1,7 $\mu$J werden Saatpulse während der Umläufe in der Kavität durch die Dispersion der Systemkomponenten auf ca. 10 ps gestreckt. Zur Kompression wird eine Folge von 6 Prismen verwendet. Auch bei diesem System besteht die Notwendigkeit für ein aufwendiges, voluminöses und teueres Pump Laser System. Zudem müssen für das Schalten des Verstärkers zwei akusto-optische Modulatoren verwendet werden.

In "Ti:sapphire regenerative amplifier for ultrashort highpower multikilohertz pulses without an external stretcher", Taiha Joo, Yiwei Jia, Graham R. Fleming, Optics Letters, Vol. 20, No. 4, 15. Februar 1995, Seiten 389-391, wird die Verwendung von zwei Prismenpaaren aus Flint-Glas innerhalb der Kavität beschrieben, die einen Saatpuls auf ca. 20 ps strecken. Damit werden Pulse mit einer Repetitionsrate bis zu 5 kHz und mit einer Energie von 50 $\mu$J pro Puls erreicht. Zur Kompression werden zwei Prismenpaare verwendet. In dieser Anordnung wird somit die Wirkung eines externen Pulsstreckers grosser Länge durch den wiederholten Durchgang eines gleichartigen Pulsstreckers innerhalb der Kavität ersetzt. Allerdings steht die Verwendung eines kavitätsinternen Prismenpaares einer weiteren Erhöhung der Kompaktheit des Verstärkers entgegen.

In der DE 100 63 976 A wird ein regenerativer Verstärker für ultrakurze Laserpulse beschrieben, der einen Resonator aufweist, wobei der Resonator zur Verstärkung von Laserpulsen, insbesondere von ultrakurzen Laserpulsen, wenigstens zwei Spiegel zur Reflexion der Laserpulse, ein zwischen den Spiegeln angeordnetes optisches Verstärkungsmedium zur Verstärkung der Laserpulse und Mittel zur zeitlichen Dehnung der Laserpulse aufweist. Die Mittel zur zeitlichen Dehnung sind durch wenigstens einen Spiegel gebildet, dessen bzw. deren Gruppengeschwindigkeitsdispersion so gewählt ist, dass eine zur Herabsetzung der Spritzenleistung erforderliche zeitliche Dehnung der Laserpulse erzielt ist. Bei diesem regenerativen Verstärker weist der Spiegel vorzugsweise eine positive Gruppengeschwindigkeitsdispersion auf.

Die gattungsgemäßen Laseranordnungen des Stands der Technik sind hinsichtlich der erzielbaren Pulsstreckung durch die Materialdispersion der Systemkomponenten beschränkt bzw. erlauben durch ihren Aufbau mit internen Prismen keine hinreichende Kompaktheit.

Darüber hinaus wird die gewählte Auslegung bei pulsgepumpten Systemen durch das verwendete Lasermedium Ti:Saphir begünstigt. Aufgrund des hohen Wirkungsquerschnitts von Ti:Saphir kann zur Erzielung des notwendigen Verstärkungsfaktors der Strahlquerschnitt gross gehalten werden, wobei zu hohe Intensitäten und damit Materialschädigungen vermieden werden. Damit reicht auch die durch die Systemkomponenten bedingte Pulsstreckung aus, um unterhalb der kritischen Intensitätsschwelle zu bleiben. Zudem ist wegen der grossen Emissionsbandbreite von Ti:Saphir die dispersive Pulsstreckung nur minimal durch die Verstärkungsfilterung inhibiert. Es bleibt jedoch die Dispersion abhängig von Systemkomponenten und nur wenig beeinflussbar. Für andere Materialien mit geringerem Wirkungsquerschnitt, wie z.B. Yb-gedopte Lasermedien, gelten diese Ausbildungsmöglichkeiten nicht mehr. Aufgrund des kleineren Wirkungsquerschnittes muß der Strahlquerschnitt stärker fokussiert werden, so dass zur Vermeidung der Selbstfokussierung eine viel grössere Streckung des Pulses erforderlich wird oder die Pulsenergie typischerweise kleiner als etliche $10 \mu J$ bleiben muß. Die im Stand der Technik realisierten Laseranordnungen stellen damit eine in dieser Form speziell für das Lasermedium Ti:Saphir oder ähnliche Materialien realisierbare Lösungen dar oder würden in der Realisierung mit anderen, z. B. Ybgedopten Lasermedien, zu den genannten Problematiken wie mangelnde Kompaktheit oder hohe Komplexität führen.

Eine Aufgabe der vorliegenden Erfindung besteht in der Erweiterung des Bereichs verwendbarer Lasermedien für gattungsgemässe Lasersysteme als diodengepumpter wiederherstellbarer Verstärker mit kompaktem Aufbau.

Eine weitere Aufgabe ist es, ein Lasersystem bereitzustellen, welches Laserpulse im Mikro-Joule-Bereich mit einer Dauer kürzer als 400fs und einer Repetitionsrate grösser 50kHz bei kompaktem Aufbau erzeugt.

Eine weitere Aufgabe der vorliegenden Erfindung besteht in der Bereitstellung eines Lasersystems, welches in diesem Bereich keine dynamischen Instabilitäten aufweist.

Eine weitere Aufgabe besteht in der Verringerung der Komplexität gattungsgemässer Lasersysteme als wiederherstellbarer Verstärker.

Diese Aufgaben werden durch die Gegenstände des Anspruchs 1 oder der abhängigen Ansprüche gelöst bzw. die Lösungen weitergebildet.

Die Erfindung betrifft ein hochrepetierendes, kompaktes Lasersystem nach dem Prinzip des wiederherstellbaren Verstärkers, bei dem auf einen externen Pulsstrecker zur Pulsstreckung verzichtet werden kann und das zusammen mit der Verwendung von Lasermedien jenseits Ti:Saphir neue Gestaltungsfreiheiten von Lasersystemen erlaubt.

Erfindungsgemäss kommen breitbandige Laserverstärkermedien zum Einsatz, welche eine relativ lange Speicherzeit, z. B. grösser als 1 ms, aufweisen. Als Beispiel dafür können Yb:Glas oder verschiedene Yb:Kristalle genannt werden, welche diodengepumpt werden können, so dass kompakte Anordnungen realisierbar sind. Typischerweise besitzen solchen Materialien einen recht geringen stimulierten Wirkungsquerschnitt ($0.1 \dots 5e\text{-}20 \, cm^2$), welcher allerdings wegen der langen Speicherzeit trotzdem zu annehmbaren Gewinnwerten führen kann, was vor allem bei Pumpquellen mit hoher Brillanz gegeben ist.

Zur Einkopplung von Saatpulsen in den wiederherstellbaren Verstärker kann ein - möglichst kompakter - fs-Puls-Oszillator verwendet werden, welcher Saat-Pulse geeigneter Kürze zur Verfügung stellt und bezüglich der Wellenlänge mit dem aktiven Übergang im Verstärkermedium übereinstimmt. Eine geeignete Pulsdauer liegt beispielsweise bei $\tau_{FWHM} < 250fs$.

Als Treiber kann ein elektro-optisches Schaltelement verwendet werden, welches Wiederholraten von über 50kHz erlaubt. Im Gegensatz zu Anordnungen mit akusto-optischen Modulatoren genügt bei der Verwendung elektro-optischer Modulatoren ein einziges Element, so dass eine kompaktere Bauweise möglich ist.

Zum Pumpen des Lasermediums eignet sich vorzugsweise eine Diodenpumpquelle hoher Brillanz.

Pulsstreckung und nachfolgende Kompression werden durch aufeinander abgestimmte Komponenten bewirkt, wobei jedoch auch die materialseitige Dispersion der übrigen Systemkomponenten genutzt bzw. in die Auslegung des Systems einbezogen werden kann. Als Pulsstrecker wird innerhalb der Kavität eine speziell hierfür ausgelegte Komponente mit dispersiver Wirkung verwendet, deren Parameter eine erfindungsgemäss kompakte Auslegung des Lasersystems erlauben. Geeignete Komponenten stellen beispielsweise dispersive Spiegel oder Blöcke aus hochdispersiven Medien, wie z.B. SF57-Glas, dar. Dabei sollte ein günstiges Verhältnis der Dispersion 2. Ordnung (positiv) zur Dispersion 3. Ordnung (positiv) erreicht werden, d.h. eine minimale Dispersion 3. Ordnung bei gleichzeitig maximaler Dispersion 2.Ordnung.

Der im Hinblick auf den Intra-Cavity-Pulsstrecker ausgelegte Kompressor kann vorteilhaft unter Nutzung eines dispersiven Gitters mit rel. geringer Linienzahl, z. B. weniger als 1700 Linien/mm oder auch weniger als 1200 Linien/mm, ausgebildet werden, so dass auch hier eine minimale positive Dispersion 3. Ordnung realisierbar ist. Andererseits bestimmt der Wunsch nach Kompaktheit, dass die Linienzahl nicht zu gering gewählt werden soll.

Das Lasersystem beruht in seiner Funktion auf dem chirped pulse amplification (CPA)-Prinzip, welches jedoch in einigen Punkten modifiziert bzw. weitergebildet wird.

Der Saat-Puls wird, im Gegensatz zum standardmässigen CPA, nicht mittels eines externen Gitter-Pulsstrekkers, z. B. nach Martinez, verbreitert, sondern als fs-Puls oder auch als ps-Puls mit einer Dauer von einigen 10 Pikosekunden in den wiederherstellbaren Verstärker eingekoppelt. Erfindungsgemäss kann somit ausserhalb der Kavität zwar eine geringfügige Streckung, beispielsweise durch einen Block dispersiven Materials, erfolgen, eine vollständige Streckung erfolgt ausserhalb der Kavität nicht. Hingegen wird dann innerhalb der Kavität mittels eines hochdispersiven Elements, wie z.B. einem Block dispersiven Materials oder einer Spiegel-Anordnung, der zunächst kurze oder maximal vorgestreckte Puls mit jedem Umlauf verbreitert. Dies führt dazu, dass bei nicht allzu hohen Endenergien, z. B. <30 μJ, ein vernachlässigbares B-Integral angesammelt wird und es nicht zur Zerstörung bzw. Pulsverbreiterung durch Selbstphasenmodulation (SPM) kommt.

Nach erfolgter, insbesondere vollständiger, Verstärkung bzw. allen Umläufen in der Kavität liegen die typischen Pulsbreiten dann bei etlichen 10ps. Dies gilt typischerweise für transformationsbegrenzte Saatpulse von 150fs Dauer, wobei der Streckungsfaktor durch die zusätzlichen hochdispersiven Elemente im Resonator 3-10 mal grösser ist als mit ausschliesslich nativen Komponenten.

Eine hohe Pumpdiodenbrillianz führt im regenerativen Verstärker zu einem relativ hohen Verstärkungsfaktor pro Umlauf (z. B. Kleinsignalgewinn $G_0$ = 1.2...1.3). Zudem wird durch die hohe Wiederholrate, sowie hohe Inversionslebensdauer und geringer stimulierter Wirkungsquerschnitt im Verstärkermedium dieses im quasi-cw Modus bei relativ hohen Gewinnwerten gesättigt. Dies wird erreicht, indem eine möglichst geringe Umlaufzahl gewählt wird, typischerweise unter 100 Umläufen, um die benötigten Pulsenergien zu erreichen. Bei einer Systemauslegung mit zu hohem Gewinnwert kann andererseits die Umlaufzahl bei gegebener Endenergie zu gering werden, was evtl. zur Zerstörung im Lasermedium führen kann, da der verstärkte Puls wegen mangelnder dispersiver Verbreiterung noch zu kurz ist.

Eine minimale Umlaufzahl im Verstärker garantiert auf der anderen Seite, dass die unkompensierte Dispersion 3. Ordnung, z. B. positive Dispersion bei einer Kombination von hochdispersivem Glasblock und Gitterkompressor, minimal bleibt und nach Kompression die minimale Pulsbreite nur geringfügig durch Dispersion 3. Ordnung limitiert ist. Nicht zuletzt lässt sich durch die minimierten Einflüsse einer nur geringen Umlaufzahl auch ein sehr kompakter Kompressor verwirklichen.

Die Wahl eines erfindungsgemäss geeigneten Lasermediums mit langer Inversionslebensdauer hat zudem den Vorteil, dass sich der Verstärker bei den angestrebten Wiederholraten stabil und getreu der Ansteuerfrequenz in einem einzigen möglichen Ausgangsenergiezustand betreiben lässt, wobei dies unabhängig von der gewählten Umlaufzahl ist.

Die Materialdispersion innerhalb einer Kavität mit einem Element aus optischem Glas des Typs SF57 (z.B. der Firma Schott) wird in der Regel durch dieses Glas dominiert und ergibt sich beispielsweise gemäss:

$$\beta_2(\lambda) = 2 \frac{\lambda^3 \cdot l_{mat}}{2\pi c^2} \cdot \frac{d^2 n(\lambda)}{d\lambda^2} \qquad (1)$$

$$\beta_3(\lambda) = 2 \frac{\lambda^4 \cdot l_{mat}}{4\pi^2 c^3} \cdot \left( 3 \cdot \frac{d^2 n(\lambda)}{d\lambda^2} \cdot \lambda \cdot \frac{d^3 n(\lambda)}{d\lambda^3} \right) \qquad (2)$$

$$n(\lambda) = \sqrt{1 + \frac{B_1 \cdot \lambda^2}{\lambda^2 - C_1} + \frac{B_2 \cdot \lambda^2}{\lambda^2 - C_2} + \frac{B_3 \cdot \lambda^2}{\lambda^2 - C_3}} \qquad (3)$$

$$B_1 = 1{,}81651371$$

$$B_2 = 4{,}28893641 \cdot 10^{-1}$$

$$B_3 = 1{,}07186278$$

$$C_1 = 1{,}43704198 \cdot 10^{-2}$$

$$C_2 = 5{,}92801172 \cdot 10^{-2}$$

$$C_3 = 1{,}21419942 \cdot 10^2$$

(4)

Damit folgt beispielsweise für einen 50 mm langen Block aus SF57, in den jeweils unter Einhaltung der Brewster-Bedingung die Strahlung ein- und ausgekoppelt wird:

$$\beta_2 / Umlauf = 15174 fs^2$$

$$\beta_3 / Umlauf = 12682 fs^3$$

$$\frac{\beta_2}{\beta_3} = 1{,}196 fs^{-1}$$

$$T_{int} = 0{,}996 / 50mm, \quad \text{interne Transmission}$$

(5)

Für andere Glas-Typen ergeben sich dementsprechend als Werte:

• SF10

$$\beta_2 / Umlauf = 11408 fs^2$$

$$\beta_3 / Umlauf = 10462 fs^3$$

$$\frac{\beta_2}{\beta_3} = 1{,}09 fs^{-1}$$

$$T_{int} = 0{,}994 / 50mm, \quad \text{interne Transmission}$$

(6)

• BK7

$$\beta_2 / Umlauf = 2428 fs^2$$

$$\beta_3 / Umlauf = 2634 fs^3$$

$$\frac{\beta_2}{\beta_3} = 0{,}524 fs^{-1}$$

$$T_{int} = 0{,}996 / 50mm, \quad \text{interne Transmission}$$

(7)

Aus der durch das dispersive Element bewirkten Dispersion folgt eine Streckung eines $sech^2(1.763 * t/\tau_{FWHM})$ Saat-Pulses mit $\tau_{FWHM} = 150 fs$ innerhalb der Kavität gemäss:

$$\Delta\tau / Umlauf \cong \beta_2 / Umlauf \cdot \Delta\nu \cdot 2\pi$$

$$= \beta_2 / Umlauf \cdot \frac{2\pi \cdot 0{,}315}{\tau_{FWHM}} \qquad (8)$$

$$= 15174\, fs^2 \cdot \frac{2\pi \cdot 0{,}315}{150\, fs} = 200\, fs$$

Darüber hinaus bewirken die weiteren Komponenten der Kavität, wie z.B. Pockels-Zelle, Lasermedium, Viertelwellenlängenplättchen oder Polarisator, zusätzliche dispersive Anteile von typischerweise ca. $4000 fs^2$, so dass sich insgesamt eine Dispersion pro Umlauf von

$$\beta_2^{total} / Umlauf \cong 20000\, fs^2 \qquad (9)$$

ergibt. Vernachlässigt man die, in diesem Fall der dispersiven Verbreiterung entgegenwirkende Verstärkerfilterung, so erreicht man nach einer Anzahl von 80 Umläufen eine totale Pulsstreckung von

$$\Delta\tau_{80} = 80 \cdot 20000\, fs^2 \cdot \frac{2\pi \cdot 0{,}315}{150\, fs} = 21{,}1\, ps \qquad (10)$$

Dem gegenüber stehen eine ohne SF57 erzielbare Dispersion von ca. $4000 fs^2$, die dadurch erreichte Pulsverbreiterung von ca. 4.2 ps und die um den Faktor 5 vergrösserte Pulsintensität.

Zur Pulskompression stehen verschiedene Kompressorausgestaltungen zur Verfügung, die erfindungsgemäss auf die innerhalb der Kavität erfolgte Pulsstreckung abgestimmt werden. Ein Treacy-Kompressor als geeignetes Design zur nachfolgenden Pulskompression für eine solche kompakten Ausführungsform wird beispielsweise in Agrawal, G.P., Nonlinear Fiber Optics, Academic Press 1989, Seite 150, beschrieben.

Mit einer optischen Länge $L_{opt}$ zwischen den Gittern des Kompressors, bzw. einer optischen Länge als der Strecke zwischen der wiederholten Nutzung des gleichen Gitters, und der Gitterkonstante $\Gamma$ mit $d = 1/\Gamma$ folgt

$$\beta_2 = \frac{\lambda^3 \cdot L_{opt}}{2\pi \cdot c^2 \cdot d^2 \cdot \cos^2\Theta}$$

$$\Theta = a\sin\left[\frac{\sin(\gamma) \cdot d - \lambda}{d}\right] \qquad (11)$$

wobei $\Theta$ den Winkel zwischen der Normalen und dem ausfallenden Strahl auf dem Gitter angibt und $\gamma$ für den Einfallswinkel auf das Gitter steht.

Für die oben erhaltenen Werte von $\beta_2 = 20000 fs^2$ und einer Anzahl von 80 Umläufen muss eine Dispersion von

$$\beta_2^{Kompr} = 80 \cdot 20000\, fs^2 = -1{,}6\, ps^2 \qquad (12)$$

erreicht werden. Daraus folgt für die optische Länge:

$$L_{opt} = \frac{\beta_2 \cdot \pi \cdot c^2 \cdot d^2 \cdot \cos^2 \Theta}{\lambda^3}$$

mit

$$d = \frac{1}{\Gamma} = \frac{1}{1200 \cdot l/mm}$$
$$\lambda = 1{,}04 \mu m$$ 

$$\gamma = 50°$$
$$\Theta = 28{,}8°$$
$$\Rightarrow L_{opt} = 217 mm$$

(13)

Um eine dynamische Stabilität des erfindungsgemässen Lasersystems zu erhalten bzw. aufrecht zu erhalten, wird ein Lasermedium mit einer hohen Lebensdauer $\tau_L$ des oberen Niveaus verwendet.

Zur Berechnung der dynamischen Stabilität kann allgemein ein in der US 60/474,250 dargestellter Ansatz gewählt werden. Die numerische Lösung eines das System beschreibenden Differentialgleichungssystems für zwei Materialien mit unterschiedlichen Werten für $\tau_L$ führt zu folgenden Ergebnissen:

| | Hohe Lebensdauer $\tau_L$ | Kurze Lebensdauer $\tau_L$ |
|---|---|---|
| $\lambda$ | 1040 nm | 1040 nm |
| $\sigma$ | $1 \cdot 10^{-24}$ $m^2$ | $125 \cdot 10^{-24}$ $m^2$ |
| $\omega_{gain}$ | 75 $\mu m$ | 75 $\mu m$ |
| $\tau_L$ | 2000 $\mu s$ | 100 $\mu s$ |
| $g_0$ | 0,262 | 1,64 |
| $T_R$ | 13,33 ns | 13,33 ns |
| $l$ | 2 % | 2 % |
| $E_{Seed}$ | 0,5 nJ | 0,5 nJ |
| $E_{Sattigung}$ | 3,4 mJ | 27 $\mu J$ |

Für beide Lebensdauern wurden die ausgekoppelten Energien als Funktion der Frequenz des Regenerativen Verstärkers für einen Bereich relevanter Gatelängen berechnet.

Damit kann durch die erfindungsgemässe Wahl und Abstimmung von diodengepumpten Lasermedium, Intra-Cavity-Pulsstrecker, Extra-Cavity-Kompressor und elektro-optischem statt akustooptischem Schaltelement ein hochrepetierendes, kompaktes Lasersystem realisiert werden, das auch in Bereichen oberhalb von 250 kHz ein stabiles Verhalten aufweist und dessen Komponenten keiner Zerstörung durch zu hohe Intensitäten unterworfen sind.

Erfindungsgemässe Lasersysteme werden nachfolgend anhand von in der Zeichnung schematisch dargestellten Ausführungsbeispielen rein beispielhaft näher beschrieben. Im einzelnen zeigen

Fig. 1     die Darstellung der Kavität eines Lasersystems nach dem Prinzip des wiederherstellbaren Verstärkers nach dem Stand der Technik;

Fig.2     die Darstellung der Kavität einer ersten Ausführungsform des erfindungsgemässen Lasersystems;

Fig.3     die Darstellung der Kavität einer zweiten Ausführungsform des erfindungsgemässen Lasersystems;

Fig.4     die Darstellung eines Pulskompressors für ein erfindungsgemässes Lasersystem;

Fig.5   die Darstellung der Gesamtanordnung der ersten Ausführungsform des erfindungsgemässen Lasersystems;

Fig.6   die Darstellung der optischen Spektren von Saatpuls und verstärktem Puls für die erste Ausführungsform eines erfindungsgemässen Lasersystems;

Fig.7   die Darstellung der gemessenen Autokorrelation der verstärkten Pulse im Vergleich mit einer gerechneten Autokorrelation von idealen Pulsen für die erste Ausführungsform eines erfindungsgemässen Lasersystems;

Fig.8   die Darstellung von Berechnungsergebnissen für die Stabilität der emittierten Energie in Abhängigkeit von Gatelänge und Repetitionsrate bei einer Speicherzeit 2 ms und

Fig.9   die Darstellung von Berechnungsergebnissen für die Stabilität der emittierten Energie in Abhängigkeit von Gatelänge und Repetitionsrate bei einer Speicherzeit 100 $\mu$s.

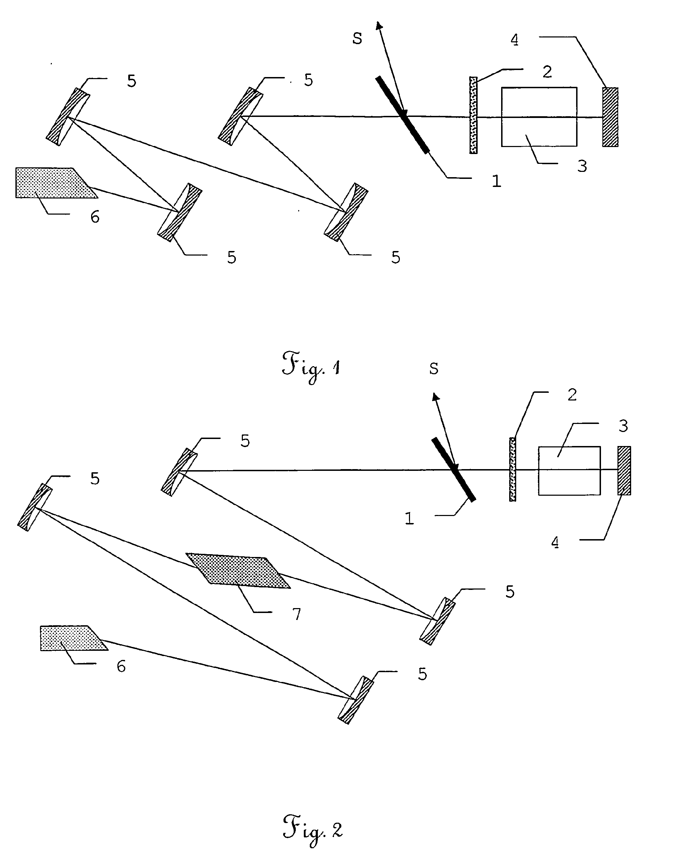

In Fig. 1 wird die Kavität mit den gattungsgemässen Systemkomponenten für ein Lasersystem nach dem Prinzip des wiederherstellbaren Verstärkers nach dem Stand der Technik dargestellt. Ein polarisierter Saat-Laserpuls von einer Saat-Laserquelle wird über einen Polarisator 1 in die Anordnung eingekoppelt und wird von einem Spiegel 4 nach dem Durchgang durch einen elektrooptischen Modulator 3, wie z.B. eine Pockels-Zelle, und ein Viertelwellenplättchen 2 reflektiert. In Abhängigkeit von der an den elektrooptischen Modulator 3 angelegten Spannung wird die Polarisationsebene des Laserstrahls gedreht, so dass der Polarisator 1 passiert werden kann. Durch eine entsprechende Schaltung können damit sowohl Pulse in die Anordnung ein- als auch als Laserpuls S ausgekoppelt werden. Der elektrooptische Modulator 3 bildet damit im Zusammenspiel mit dem Polarisator 1 einen extern steuerbaren Schalter, durch den ein Lichtpuls wahlweise ein- und ausgekoppelt und die Resonatorgüte gesteuert werden kann. Ist ein Puls eingekoppelt und damit innerhalb des Resonators gefangen, wird er bei jedem Durchgang durch das Lasermedium 6 verstärkt, wobei mehrfache Reflexionen an Faltspiegeln 5 erfolgt. Das Lasermedium 6 wird durch eine externe, hier nicht dargestellte, Laserdiodenquelle optisch gepumpt. Nach einer gewissen Anzahl von Resonatorumläufen und Durchgängen durch das verstärkende Lasermedium 6 wird der Puls durch eine erneute Rotation der Polarisation durch Schalten des elektrooptischen Modulators 3 über den Polarisator 1 als Laserpuls S ausgekoppelt. Diese Anordnung stellt lediglich ein Beispiel für einen wiederherstellbaren oder regenerativen Verstärker dar.

In Fig.2 wird die in Fig. 1 gezeigte Kavität der ersten Ausführungsform des erfindungsgemässen Lasersystems durch Einbringen eines dispersionsbeeinflussenden Elements als Pulsstrecker 7 modifiziert. In diesem Beispiel wird in den Strahlgang zwischen zwei Faltspiegel 5 ein Pulsstrecker 7 eingebracht, der als Block aus Glas des Typs SF57 ausgebildet ist. Um eine möglichst verlustfreie Einkopplung in den Pulsstrecker 7 zu erreichen, ist dieser mit zwei Brewster-Fenstern ausgebildet. Erfindungsgemäss können jedoch auch andere Elemente aus anderen Materialien, mit anderen Formgebungen oder an anderen Positionen verwendet werden. So können beispielsweise Gires-Tournois-Interferometer oder dispersive Schichtstrukturen anstelle eines der Faltspiegel 5 in Ergänzung oder als Alternative zu dem Pulsstrecker 7 aus einem dispersiven Glasblock plaziert werden. Auch kann der Glasblock mit einer verspiegelten Seite ausgebildet werden, so dass dieser gleichzeitig die Funktion eines Faltspiegels 5 aufweist. Eine weitere Ausgestaltungsmöglichkeit ist durch die mehrfache Reflexion im Inneren des Glasblocks bzw. eines anderen dispersiven Mediums gegeben, die an einer verspiegelten Fläche oder aber auch an der Grenzfläche zur Luft erfolgen kann.

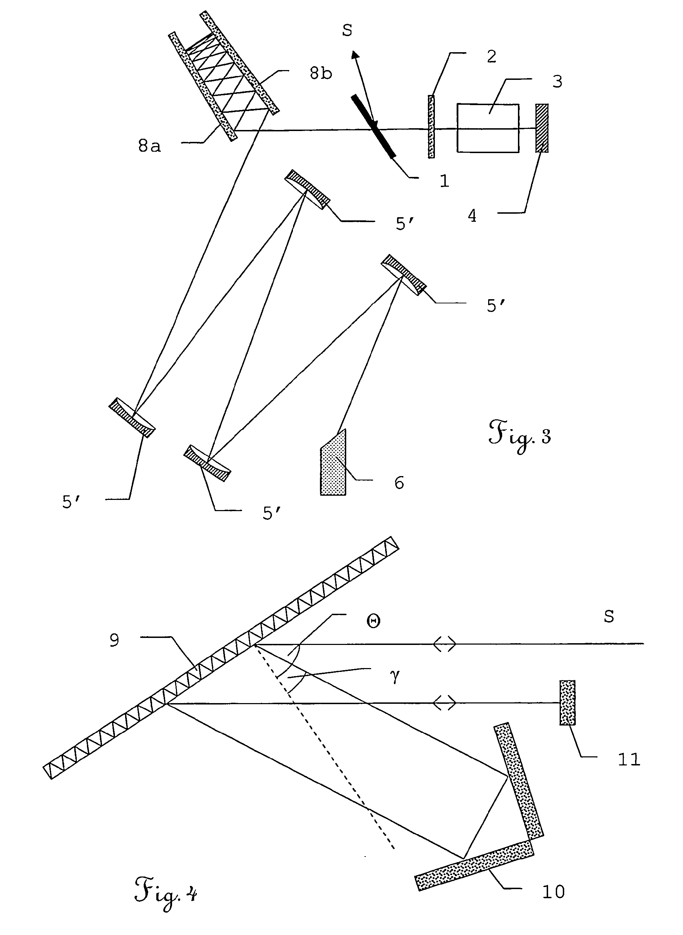

Fig.3 zeigt die Darstellung der Kavität einer zweiten Ausführungsform des erfindungsgemässen Lasersystems. Das Grundprinzip entspricht dem in Fig. 1 dargestellten Aufbau eines wiederherstellbaren Verstärkers. Ein polarisierter Saat-Laserpuls wird über einen Polarisator 1 in die Anordnung aus Viertelwellenplättchen 2, elektrooptischen Modulator 3 und Spiegel 4 eingekoppelt. Die Kavität wird nun durch Faltspiegel 5' und ein Lasermedium 6' in einer gegenüber Fig. 1 oder Fig.2 veränderten Anordnung definiert. Als Pulsstrecker wird eine Kombination aus zwei reflektierenden Elementen 8a und 8b mit dispersiven Eigenschaften als Pulstrecker verwendet, wobei die Flächen leicht gegeneinander geneigt sind, so dass ein eingestrahlter Puls mehrfach reflektiert und so mehrmals auf die Elemente 8a und 8b mit dispersiven Eigenschaften geführt wird. Neben einer allgemeinen Faltung des Strahlgangs in der Kavität kann hierdurch auch während eines einzigen Umlaufs eine häufige Wechselwirkung mit den dispersiven Elementen 8a und 8b und dadurch eine entsprechende Pulsstreckung erreicht werden. Wird der Winkel zwischen den reflektierenden Oberflächen der Elemente 8a und 8b verstellbar gestaltet oder der Einfallswinkel, z.B. mittels einem verstellbaren Einkoppelspiegel, verändert, so kann über die Zahl der Reflexionen auch die pro Umlauf erzielbare Dispersion und damit die Pulsstreckung variiert werden. Der Pulsstrecker ist hier lediglich aus Vereinfachungsgründen in einer einfachen Variante aus den zwei Elementen 8a und 8b dargestellt. Sowohl der Pulsstrecker als auch eine möglicherweise zur Einkopplung in den Pulsstrecker verwendete Optik können jedoch auch noch durch weitere Elemente zur Strahlführung ergänzt werden. Gleichfalls kann der Pulsstrecker auch als ein monolithisches Element ausgebildet werden, bei dem eine Reflexion an zueinander geneigt ausgebildeten Grenzflächen erfolgt. Die dispersive Wirkung kann dann durch das Medium und/oder durch eine ggf. aufgebrachte reflektierende Schicht bewirkt werden. Ein zur Realisierung eines solchen Pulsstreckers mit multipler Reflexion geeignetes Konzept und dazugehörige Ausführungsformen werden in der US 60/442,917 beschrieben.

In Fig.4 wird ein Pulskompressor nach dem Treacy-Design für ein erfindungsgemässes Lasersystem erläutert. Der aus dem wiederherstellbaren Verstärker ausgekoppelte Laserpuls S wird auf ein Gitter 9, z.B. mit einer Linienzahl von weniger als 1700 Linien/mm, vorzugsweise von ca. 1200 Linien/mm, geführt und von dort über einen Reflektor 10 mit zwei rechtwinkligen Spiegelflächen wieder auf das Gitter 9 und von dort auf einen rückreflektierenden Spiegel 11 geführt. Durch diesen Spiegel 11 erfolgt eine Strahlumkehr, so dass der Laserpuls S den Kompressor auf dem gleichen Weg nach einer in diesem Beispiel insgesamt viermaligen Wechselwirkung mit dem Gitter verlässt. In dieser Ausführungsform fällt der Laserpuls gegenüber der Flächennormalen des Gitters z. B. unter einem Winkel $\gamma$ von 50° ein und wird unter einem Winkel $\odot$ von 28,8° reflektiert. Die für die Kompression relevante optische Länge zwischen zwei konsekutiven Gitterreflexionen beträgt, wie in der obigen Beispielrechnung gezeigt, nur ca. 217 mm.

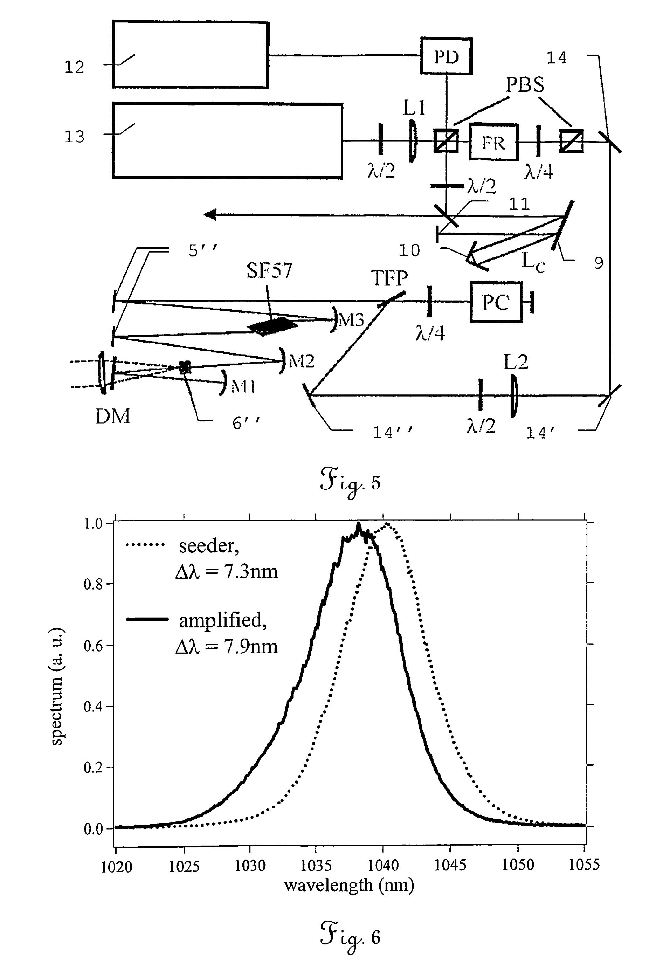

Fig. 5 zeigt die schematische Darstellung der Gesamtanordnung der ersten Ausführungsform des erfindungsgemässen Lasersystems. Neben dem bereits erläuterten Aufbau der Kavität sind die weiteren Komponenten zur Erzeugung und Einkopplung von Saatpulsen und zur nachfolgenden Pulskompression dargestellt. Die einzelnen Komponenten sind wie folgt bezeichnet:

| | |
|---|---|
| 6" | Lasermedium |
| 9 | Gitter |
| 10 | Reflektor |
| 11 | Spiegel |
| 12 | Pulse-Delay-Generator und Hochspannungs-Versorgung für die Pockelszelle |
| 13 | Femtosekunden-Puls-Oszillator, 150 fs, 80 MHz, Leistung 250 mW, Wellenlänge 1040 nm |
| 14 | Spiegel |
| 14' | Spiegel |
| 14" | Spiegel |
| PD | Photodiode |
| PC | Pockelszelle |
| PBS | Polarisator |
| TFP | Dünnschicht-Polarisator |
| M1 | gekrümmter Spiegel |
| M2 | gekrümmter Spiegel |
| M3 | gekrümmter Spiegel |
| DM | Dichroitischer Spiegel |
| L1 | Modematching Linse |
| L2 | Modematching Linse |
| $L_C$ | Optische Länge zwischen den Gitterreflexionen |
| FR | Faraday-Rotator |
| $\lambda/2$ | Halbwellenlängenplättchen |
| $\lambda/4$ | Viertelwellenlängenplättchen |

In Fig.6 erfolgt die Darstellung der optischen Spektren von Saatpuls und verstärktem Puls für die erste Ausführungsform eines erfindungsgemässen Lasersystems.

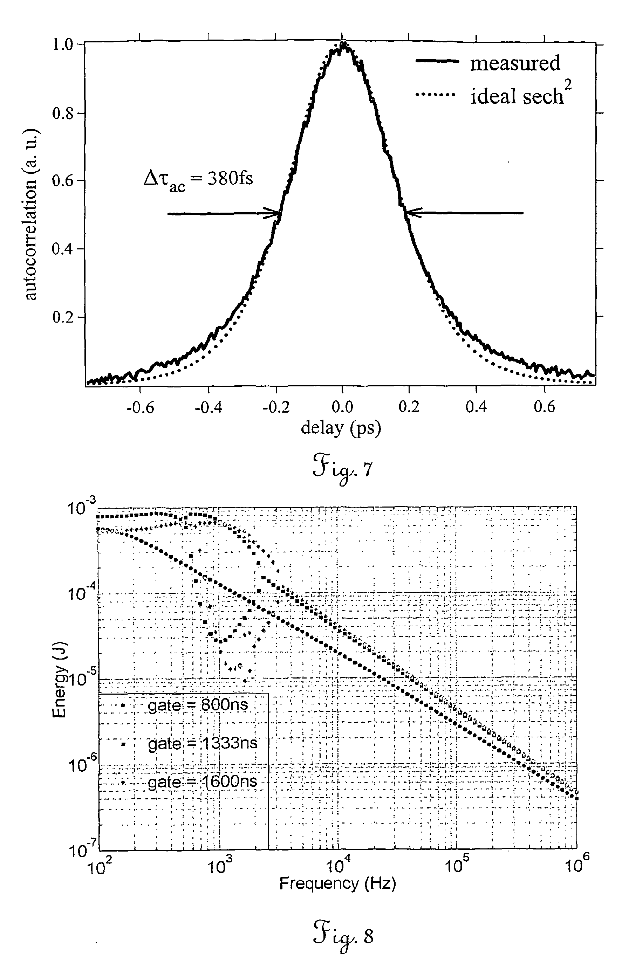

Fig.7 zeigt die Darstellung der gemessenen Autokorrelation der verstärkten Pulse im Vergleich mit einer gerechneten Autokorrelation von idealen Pulsen für die erste Ausführungsform eines erfindungsgemässen Lasersystems.

Fig.8 zeigt die Darstellung von Berechnungsergebnissen für die Stabilität der emittierten Energie in Abhängigkeit von Gatelänge und Repetitionsrate bei einer Speicherzeit 2 ms.

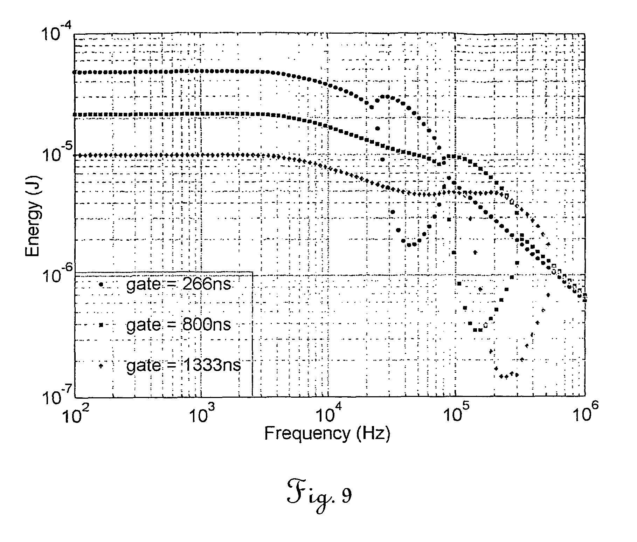

Fig.9 zeigt die Darstellung von Berechnungsergebnissen für die Stabilität der emittierten Energie in Abhängigkeit von Gatelänge und Repetitionsrate bei einer Speicherzeit 100 $\mu$s.

Fig.8 und Fig.9 zeigen das Auftreten von dynamischen Instabilitäten in Form von Bifurkationen für bestimmte Parameterkonstellationen von emittierter Energie, Repetitionsrate und Gatelänge. Durch geeignete Wahl von Parameterkombinationen, wie z.B. Gatelänge und Frequenz, können erfindungsgemäss Instabilitäten vermieden und auch hochrepetierende Lasersysteme stabil betrieben werden. Geeignete Verfahren und Vorrichtungen zur Unterdrückung instabilen Verhaltens werden in der PCT/EP2004/005812 beschrieben.

## Patentansprüche

1. Lasersystem mit einer Repetitionsrate grösser 50 kHz nach dem Prinzip des wiederherstellbaren Verstärkers mit mindestens

• einem verstärkenden Lasermedium (6),
• einem Laserresonator mit mindestens einem Resonatorspiegel (5) und mindestens einem Modulator (3) und
• einer Pumpquelle, insbesondere eine Laserdiodenquelle, zum Pumpen des Lasermediums (6),

**dadurch gekennzeichnet, dass**
der Laserresonator einen Pulsstrecker (7,8a,8b) als speziell hierfür ausgelegte Komponente mit struktur- und/oder materialbedingt dispersiver Wirkung aufweist,
wobei der Pulsstrecker (7,8a,8b) eine minimale Dispersion 3. Ordnung bei maximaler Dispersion 2. Ordnung aufweist.

2. Lasersystem nach Anspruch 1,
**dadurch gekennzeichnet, dass**
der Pulsstrecker (7) einen Block aus hochdispersivem Material, insbesondere aus SF57-Glas, SF10-Glas oder BK7-Glas, aufweist.

3. Lasersystem nach Anspruch 2,
**dadurch gekennzeichnet, dass**
innerhalb des Blocks eine Mehrfachreflexion erfolgt, insbesondere durch Reflexion an Grenzflächen.

4. Lasersystem nach einem der vorangehenden Ansprüche,
**dadurch gekennzeichnet, dass**
der Pulsstrecker (8a,8b) ein Gires-Tornouis-Interferometer oder eine dispersive Schichtstruktur, vorzugsweise als Faltspiegel, aufweist.

5. Lasersystem nach Anspruch 4,
**dadurch gekennzeichnet, dass**
der Pulsstrecker (8a,8b) wenigstens zwei reflektierende Flächen aufweist, wobei die Flächen so angeordnet sind, dass die Flächen

- gegeneinander und
- mit einem, insbesondere einstellbarem, Öffnungswinkel

orientiert sind und der Laserstrahl an wenigstens einer der Flächen wenigstens zweimal reflektiert wird.

6. Lasersystem nach einem der vorangehenden Ansprüche,
**dadurch gekennzeichnet, dass**
das Lasermedium (6) eine Inversionslebensdauer grösser als 1 ms besitzt, insbesondere Yb:Glas oder Yb:Kristall ist.

7. Lasersystem nach einem der vorangehenden Ansprüche,
**gekennzeichnet durch**
einen Femtosekunden-Oszillator (13) zur Einkopplung von Saatpulsen, wobei der Femtosekunden-Oszillator (13) so ausgebildet und angeordnet ist, dass die Saatpulse beim Einkoppeln in den Laserresonator Femtosekundenpulse oder Pikosekundenpulse sind.

8. Lasersystem nach einem der vorangehenden Ansprüche,
**gekennzeichnet durch**
ein elektro-optisches Schaltelement als Modulator (3).

9. Lasersystem nach einem der vorangehenden Ansprüche,
**gekennzeichnet durch**
einen Pulskompressor ausserhalb des Laserresonators, insbesondere nach dem Treacy-Design.

10. Lasersystem nach Anspruch 9,
**dadurch gekennzeichnet, dass**
der Pulskompressor ein dispersives Gitter mit weniger als 1700 Linien/mm, vorzugsweise weniger als 1200 Linien/mm, aufweist.

**Claims**

1. Laser system having a repetition rate greater than 50 kHz according to the principle of the reproducible amplifier, comprising at least

   • an amplifying laser medium (6)
   • a laser resonator having at least one resonator mirror (5) and at least one modulator (3) and
   • a pump source, in particular a laser diode source, for pumping the laser medium (6),

   **characterized in that** the laser resonator has a pulse stretcher (7, 8a, 8b) as a component designed specially for this purpose and having a dispersive effect as a result of the structure and/or material, the pulse stretcher (7, 8a, 8b) having a minimum 3rd order dispersion in combination with a maximum 2nd order dispersion.

2. Laser system according to Claim 1, **characterized in that** the pulse stretcher (7) has a block comprising highly dispersant material, in particular comprising SF57 glass, SF10 glass or BK7 glass.

3. Laser system according to Claim 2, **characterized in that** a multiple reflection is effected within the block, in particular by reflection at interfaces.

4. Laser system according to any of the preceding claims, **characterized in that** the pulse stretcher (8a, 8b) has a Gires-Tournois interferometer or a dispersive layer structure, preferably as a folding mirror.

5. Laser system according to Claim 4, **characterized in that** the pulse stretcher (8a, 8b) has at least two reflecting surfaces, the surfaces being arranged so that the surfaces are oriented

   - towards one another and
   - with an opening angle, in particular an adjusting opening angle,

   and the laser beam is reflected at least twice by at least one of the surfaces.

6. Laser system according to any of the preceding claims, **characterized in that** the laser medium (6) has an inversion lifetime of greater than 1 ms, in particular is Yb glass or Yb crystal.

7. Laser system according to any of the preceding claims, **characterized by** a femtosecond oscillator (13) for coupling in seed pulses, the femtosecond oscillator (13) being formed and arranged in such a way that the seed pulses are femtosecond pulses or picosecond pulses when coupled into the laser resonator.

8. Laser system according to any of the preceding claims, **characterized by** an electro-optical switching element as modulator (3).

9. Laser system according to any of the preceding claims, **characterized by** a pulse compressor outside the laser resonator, in particular according to the Treacy design.

10. Laser system according to Claim 9, **characterized in that** the pulse compressor has a dispersive grating having less than 1,700 lines/mm, preferably less than 1,200 lines/mm.

**Revendications**

1. Système laser ayant un taux de répétition supérieur à 50 Hz, selon le principe de l'amplificateur rétablissable, avec au moins :

   • un milieu laser (6) amplificateur,
   • un résonateur laser avec au moins un miroir de résonateur (5) et au moins un modulateur (3), et
   • une source de pompage, en particulier une source à diode laser, pour pomper le milieu laser (6),

   **caractérisé en ce que**
   le résonateur laser présente un prolongateur d'impulsions (7, 8a, 8b) réalisé sous forme de composants de conception spéciale. à cette fin, ayant, de par la structure et/ou le matériau, un effet dispersif, le prolongateur d'impulsions (7, 8a, 8b) présentant une dispersion minimale de 3$^{\text{ème}}$ ordre, pour une dispersion maximale du 2$^{\text{ème}}$ ordre.

2. Système laser selon la revendication 1,
   **caractérisé en ce que**
   le prolongateur d'impulsions (7) présente un bloc formé d'un matériau fortement dispersif, en particulier de verre SF57, de verre SF10 ou de verre BK7.

3. Système laser selon la revendication 1,
   **caractérisé en ce que,**
   à l'intérieur du bloc, est effectuée une réflexion multiple, en particulier par réflexion sur des surfaces limites.

4. Système laser selon l'une des revendications précédentes,
   **caractérisé en ce que**
   le prolongateur d'impulsions (8a, 8b) présente un interféromètre de Gires-Tournois, ou une structure en couches dispersive, de préférence réalisée sous forme de miroirs pliés.

5. Système laser selon la revendication 4,
   **caractérisé en ce que**
   le prolongateur d'impulsions (8a, 8b) présente au moins deux surfaces réfléchissantes, les surfaces étant disposées de manières que ces surfaces soient orientées

   - en sens opposé, et
   - avec un angle d'ouverture, en particulier réglable,

   et le rayon laser est réfléchi au moins deux fois sur au moins l'une des surfaces

6. Système laser selon l'une des revendications précédentes,
   **caractérisé en ce que**
   le milieu laser (6) présente une durée de vie en inversion supérieure à 1 ms, en particulier Yb:verre ou Yb:cristal.

7. Système laser selon l'une des revendications précédentes,
   **caractérisé par**
   un oscillateur femtoseconde (13), pour le couplage d'impulsions de semence, l'oscillateur femtoseconde (13) étant réalisé et disposé de manière que, lors du couplage dans le résonateur laser, les impulsions de semence soient des impulsions femtoseconde, ou des impulsions picoseconde.

8. Système laser selon l'une des revendications précédentes,
   **caractérisé par**
   un élément de commutation électro-optique, faisant office de modulateur (3).

9. Système laser selon l'une des revendications précédentes,
   **caractérisé par**
   un compresseur d'impulsions à l'extérieur du résonateur laser, en particulier selon la conception Treacy.

10. Système laser selon la revendication 9,
    **caractérisé en ce que**
    le compresseur d'impulsions est un réseau dispersif comportant moins de 1700 lignes/mm, de préférence moins de 1200 lignes/mm.

EP 1 687 876 B1

Fig. 1

Fig. 2

13

*Fig. 3*

*Fig. 4*

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030095320 A
- DE 10063976 A
- US 60474250 B
- US 60442917 B
- EP 2004005812 W

**In der Beschreibung aufgeführte Nicht-Patentliteratur**

- **M. PESSOT et al.** Chirped Pulse Amplification of a 300fs Pulse in an Alexandrite Regenerative Amplifier. *IEEE J. Quantum Electron.,* 1989, vol. QE-19, 61-66
- **H. LIU et al.** Directly diode-pumped Yb:KY(WO4)2 regenerative amplifiers. *Opt. Lett.,* 2002, vol. 27, 722-724
- **GUANGHUA CHENG ; LIANJUN YU ; YISHAN WANG ; QING LIU ; GUOFU CHEN ; WIE ZHAO.** A compact Ti:sapphire femtosecond pulse amplifier without stretcher at high repetition rate. *Chinese Optics Letters,* 20. April 2003, vol. 1 (4), 225-227
- **T.B. NORRIS.** Femtosecond pulse amplification at 250 kHz with a Ti:sapphire regenerative amplifier and application to continuum generation. *Optics Letters,* 15. Juli 1992, vol. 17 (14), 1009-1011
- **TAIHA JOO ; YIWEI JIA ; GRAHAM R. FLEMING.** Ti:sapphire regenerative amplifier for ultrashort highpower multikilohertz pulses without an external stretcher. *Optics Letters,* 15. Februar 1995, vol. 20 (4), 389-391
- **AGRAWAL, G.P.** Nonlinear Fiber Optics. Academic Press, 1989, 150